# EUROPÄISCHE PATENTSCHRIFT

(11) **EP 3 449 556 B1**
(45) Veröffentlichungstag und Bekanntmachung des Hinweises auf die Patenterteilung: **23.12.2020**
(21) Anmeldenummer: 17713893.0
(22) Anmeldetag: 23.03.2017
(51) Int. Cl.: H02M 7/00, H05K 7/14

(54) **ANTRIEBSSYSTEM MIT EINEM VON EINEM WECHSELRICHTER GESPEISTEN ELEKTROMOTOR**
DRIVING SYSTEM FOR ELECTRICAL MOTOR FED WITH AN INVERTER
SYSTEME DE COMMANDE POUR MOTEUR ELECTRIQUE ALIMENTE PARUN ONDULEUR

(30) Priorität: 29.04.2016 DE 102016005293
(43) Veröffentlichungstag der Anmeldung: 06.03.2019
(73) Patentinhaber: SEW-Eurodrive GmbH & Co. Kg ABT. ECG, 76646 Bruchsal (DE)
(72) Erfinder: SENFT, Christian, 76228 Karlsruhe-Grünwettersbach (DE); NORENBURG, Benjamin, 76689 Karlsdorf-Neuthard (DE); RICHTER, Sebastian, 69120 Heidelberg (DE)
(86) Internationale Anmeldenummer: PCT/EP2017/025056
(87) Internationale Veröffentlichungsnummer: WO 2017/186356

(56) Entgegenhaltungen:
- EP-A2- 3 032 732
- US-B1- 6 462 976

## Beschreibung

Die Erfindung betrifft ein Antriebssystem mit einem von einem Wechselrichter gespeisten Elektromotor.

US 6 462 976 stellt einen Wechselrichter dar, der auf einem einzigen Chipsubstrat aufgebaut ist.

Wie beispielsweise aus der EP 3 032 732 A2 ist bekannt, dass ein Antriebssystem einen Wechselrichter aufweist, der wiederum elektronische Bauelemente aufweist, die auf einer Leiterplatte bestückt sind, also angeordnet und elektrisch mit Leiterbahnen der Leiterplatte verbunden, insbesondere lötverbunden, sind.

Der Erfindung liegt daher die Aufgabe zugrunde, ein Antriebssystem weiterzubilden, wobei eine hohe Varianz von Antriebssystemen mit wenig Aufwand, insbesondere unter Verwendung nur weniger Teile oder Komponenten, herstellbar sein soll.

Erfindungsgemäß wird die Aufgabe bei dem Antriebssystem nach den in Anspruch 1 angegebenen Merkmalen gelöst.

Wichtige Merkmale der Erfindung bei dem Antriebssystem mit einem von einem Wechselrichter gespeisten Elektromotor sind, dass der Wechselrichter eine erste Leiterplatte aufweist, welche mit einem ersten und einem zweiten Steckverbinderteil bestückt ist,
wobei die erste Leiterplatte ein Verknüpfungsglied aufweist, dessen Ausgangssignal als Freigabesignal für den Wechselrichter fungiert,
wobei das Verknüpfungsglied zumindest einen Signaleingang (P1) und einen weiteren insbesondere invertierenden Eingang (Err) aufweist,
wobei der Signaleingang (P1) mit einem Kontakt des ersten Steckverbinderteils und mit einem Kontakt des zweiten Steckverbinderteils verbunden ist,
wobei eine weitere Leiterplatte mit dem zweiten Steckverbinderteil steckverbunden ist, insbesondere mittels eines auf ihr bestückten Gegensteckverbinderteils,
wobei die weitere Leiterplatte zumindest einen steuerbaren Schalter aufweist, mit dem eine elektrische Verbindung zwischen einer Versorgungsspannung und dem mit dem Signaleingang (P1) verbundenen Kontakt des zweiten Steckverbinderteils herstellbar oder trennbar ist, insbesondere schließbar oder öffenbar ist,
wobei eine auf der weiteren Leiterplatte bestückte, also angeordnete, Auswerteeinheit ein Ausgangssignal abhängig vom Vergleich des an den steuerbaren Schalter geleiteten Ansteuersignals und der an dem mit dem Signaleingang (P1) verbundenen Kontakt anliegenden, mit einem Spannungserfassungsmittel erfassten Spannungswert, insbesondere Spannungswerteverlauf, erzeugt,
wobei das Ausgangssignal der Auswerteeinheit dem weiteren insbesondere invertierenden Eingang (Err) zugeleitet wird, insbesondere über das zweite Steckverbinderteil.

Von Vorteil ist dabei, dass eine hohe Varianz an Antriebssystemen, also Antriebssysteme mit sicherheitsgerichteten Baugruppen und aktivierter sicherheitsgerichteter Funktionsweise sowie Antriebssysteme ohne sicherheitsgerichtete Funktionsweise, unter Verwendung weniger Bauteile oder Komponenten herstellbar sind. Es sind mit der Leiterplatte des Wechselrichters sicherheitsgerichtete Baugruppen, wie Notaus-Schalter, oder eine weitere Leiterplatte, die einen sicherheitsgerichtete Überwachungseinrichtung aufweist, verbindbar. Auf diese Weise ist also stets dieselbe Leiterplatte des Wechselrichters verwendbar - unabhängig von der Aktivierung oder Deaktivierung der Sicherheitsfunktionen. Zur Deaktivierung der Sicherheitsfunktionen ist auch eine Brücke mit der Leiterplatte verbindbar, welche eine Versorgungsspannung auf sicherheitsgerichtete Signaleingänge brückt, also elektrisch leitend verbindet, und somit eine Deaktivierung der Sicherheitsfunktion erkennbar macht. Wenn aber gleichzeitig die weitere Leiterplatte, also eine sicherheitsgerichtete Überwachungseinrichtung, mit der Leiterplatte des Wechselrichters verbunden ist, ist ein Fehlerzustand anzeigbar oder eine veränderte Sicherheitsfunktion aktivierbar. Vorteiligerweise weist die Leiterplatte zwei Steckverbinderschnittstellen auf, so dass zwei sicherheitsgerichtete Baugruppen gleichzeitig mit der Leiterplatte verbindbar sind.

Bei einer vorteilhaften Ausgestaltung verknüpft das Verknüpfungsglied die an seinen Eingängen (P1, P2, Err) anliegenden Signale mittels UND-Verknüpfung zur Erzeugung des Ausgangssignals des Verknüpfungsgliedes. Von Vorteil ist dabei, dass eine einfache Verknüpfung, wie beispielsweise UND Verknüpfung, zur Erzeugung des Ausgangssignals des Verknüpfungsglieds verwendbar ist.

Bei einer vorteilhaften Ausgestaltung ist die Versorgungsspannung eine Gleichspannung, insbesondere eine Niedervoltgleichspannung, insbesondere eine 24 Volt-Spannung. Von Vorteil ist dabei, dass eine einfach herstellbare Versorgungsspannung verwendbar ist.

Bei einer vorteilhaften Ausgestaltung weist das Verknüpfungsglied einen weiteren Signaleingang (P2) auf,
wobei der weitere Signaleingang (P2) mit einem weiteren Kontakt des ersten Steckverbinderteils und mit einem weiteren Kontakt des zweiten Steckverbinderteils verbunden ist,
wobei die weitere Leiterplatte einen weiteren steuerbaren Schalter aufweist, mit dem eine elektrische Verbindung zwischen der Versorgungsspannung und dem mit dem weiteren Signaleingang (P2) verbundenen weiteren Kontakt des zweiten Steckverbinderteils herstellbar oder trennbar ist, insbesondere schließbar oder öffenbar ist,
wobei die auf der weiteren Leiterplatte bestückte, also angeordnete, Auswerteeinheit ihr Ausgangssignal zusätzlich abhängig vom Vergleich des an den weiteren steuerbaren Schalter geleiteten Ansteuersignals und der an dem mit dem weiteren Signaleingang (P2) verbundenen weiteren, vom zweiten Steckverbinderteil umfassten Kontakt anliegenden, mit einem weiteren Spannungserfassungsmittel erfassten Spannungswert, insbesondere Spannungswerteverlauf, erzeugt. Von Vorteil ist dabei, dass eine zweikanalige Sicherheit erreichbar ist.

Bei einer vorteilhaften Ausgestaltung ist mit dem ersten Steckverbinderteil wahlweise ein eine Brücke aufweisendes Gegensteckverbinderteil oder eine sicherheitsgerichtete Vorrichtung, wie Schaltvorrichtung oder dergleichen, verbindbar. Von Vorteil ist dabei, dass ein Aktivieren oder Deaktivieren der Sicherheitsfunktion in einfacher Weise ermöglicht ist.

Bei einer vorteilhaften Ausgestaltung verbindet die Brücke einen eine oder die Versorgungsspannung aufweisenden Kontakt des ersten Steckverbinderteils mit demjenigen Kontakt des ersten Steckverbinderteils, welcher mit dem ersten Signaleingang (P1) elektrisch verbunden ist, und/oder mit demjenigen Kontakt des ersten Steckverbinderteils verbindet, welcher mit dem zweiten Signaleingang (P2) elektrisch verbunden ist. Von Vorteil ist dabei, dass ein Aktivieren oder Deaktivieren der Sicherheitsfunktion in einfacher Weise ermöglicht ist.

Bei einer vorteilhaften Ausgestaltung erzeugt die Auswerteeinheit ihr Ausgangssignal als NICHT-ODER-Verknüpfung, also NOR-Verknüpfung, eines ersten und eines zweiten Signals,
wobei das erste Signal abhängig vom Vergleich des an den steuerbaren Schalter geleiteten Ansteuersignals und der an dem mit dem Signaleingang (P1) verbundenen Kontakt anliegenden, mit einem Spannungserfassungsmittel erfassten Spannungswert, insbesondere Spannungswerteverlauf, erzeugt ist,
und wobei das zweite Signal abhängig vom Vergleich des an den weiteren steuerbaren Schalter geleiteten Ansteuersignals und der an dem mit dem weiteren Signaleingang (P2) verbundenen weiteren, vom zweiten Steckverbinderteil umfassten Kontakt anliegenden, mit einem weiteren Spannungserfassungsmittel erfassten Spannungswert, insbesondere Spannungswerteverlauf, erzeugt ist. Von Vorteil ist dabei, dass die Auswerteeinheit ihr Ausgangssignal in einfacher Weise erzeugt, insbesondere wobei eine zweikanalige Sicherheit erreichbar ist.

Bei einer vorteilhaften Ausgestaltung ist auf der weiteren Leiterplatte eine Überwachungseinrichtung angeordnet,
insbesondere wobei die Überwachungseinrichtung ein von der ersten Leiterplatte übermitteltes Drehzahlsignal vergleicht mit einem aus erfassten Messgrößen bestimmten Drehzahlsignal und bei unzulässig hoher Abweichung das Freigabesignal (Err) unterdrückt und/oder die Signale P1 und P2 über die steuerbaren Schalter von der Versorgungsspannung U trennt. Von Vorteil ist dabei, dass mittels der weiteren Leiterplatte eine sicherheitsgerichtete Funktion ausführbar ist, nämlich das unabhängige Überwachen der Drehzahl des Antriebs. Hierzu werden Motorstrom und/oder Motorspannung erfasst und nicht nur der ersten Leiterplatte sondern auch der weiteren Leiterplatte zugeführt. Somit ist die Überwachungseinrichtung derart ausführbar, dass sie eine Drehzahl bestimmt und mit einer von einer Regeleinrichtung des Wechselrichters, welche auf der ersten Leiterplatte angeordnet ist, bestimmten Drehzahl vergleicht. Bei unzulässig hoher Abweichung wird ein Fehlerzustand gemeldet und/oder das Freigabesignal für den Wechselrichter unterdrückt. Auf diese Weise wird eine erhöhte Sicherheit in einfacher Weise erreichbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Wechselrichtersystem eines erfindungsgemäßen Antriebssystems schematisch skizziert, wobei mit einer ersten Leiterplatte 1 eine weitere Leiterplatte 2 elektrisch verbunden, insbesondere steckverbunden, ist.
In der Figur 2 ist die weitere Leiterplatte 2 entfernt, aber eine Schaltvorrichtung 20, insbesondere Notaus-Schalter, mit der Leiterplatte 1 elektrisch verbunden.
In der Figur 3 ist statt der Schaltvorrichtung 20 nach Figur 2 eine Brücke steckverbunden mit dem ersten Steckverbinderteil 5 der ersten Leiterplatte 1.

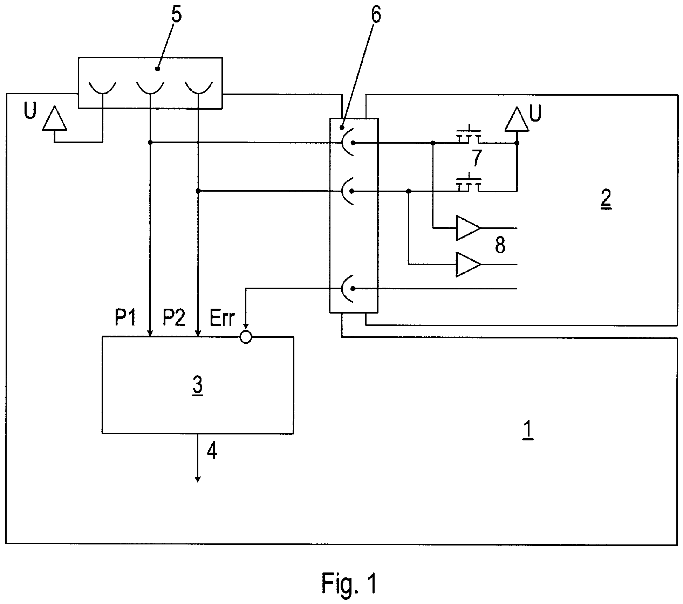

Wie in Figur 1 gezeigt, ist die erste Leiterplatte 1 mit einem ersten Steckverbinderteil 5 und einem zweiten Steckverbinderteil 6 bestückt.

Außerdem sind auf der ersten Leiterplatte 1 auch die elektronischen Bauteile eines Wechselrichters bestückt sowie die Bauteile einer sicherheitsgerichteten Überwachungseinrichtung.

Der Wechselrichter stellt ausgangsseitig eine Wechselspannung, insbesondere Drehfeldspannung, zur Verfügung, mit welcher ein Elektromotor des Antriebssystems speisbar ist.

Der Wechselrichter benötigt für die Durchführung seines Normalbetriebs ein Freigabesignal 4. Wenn dieses Signal ausfällt, wechselt der Zustand des Wechselrichters in einen Fehlerzustand, so dass der Normalbetrieb unterbrochen wird, also keine Drehfeld für den Motor erzeugt wird. Hierdurch ist ein Anhalten des Motors bewirkbar.

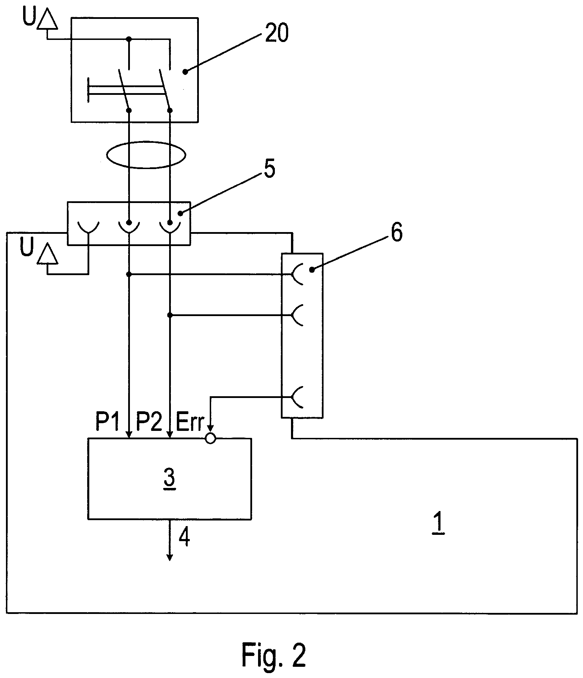

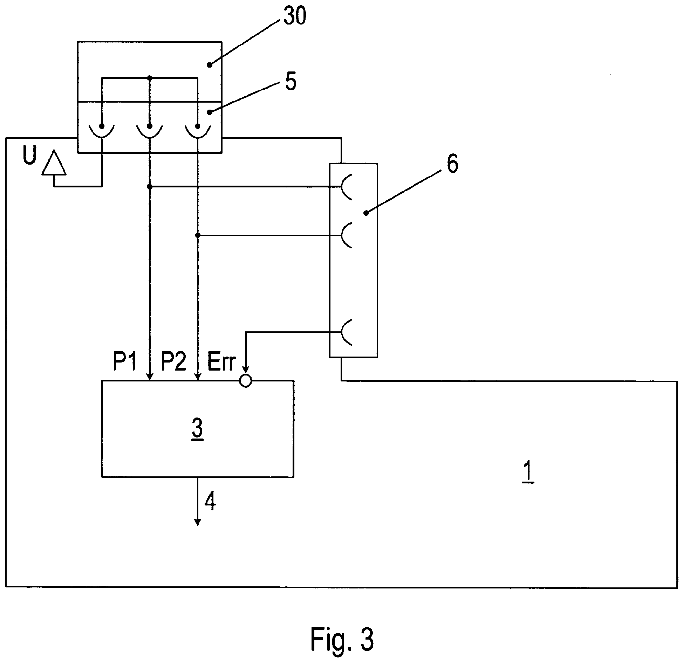

Wie in den Figuren 2 und Figuren 3 gezeigt, ist am ersten Steckverbinderteil 5 wahlweise eine Schaltvorrichtung 20 oder eine Brücke 30 verbindbar.

Am zweiten Steckverbinderteil 6 ist wahlweise eine weitere Leiterplatte 2 verbindbar, wie in Figur 1 gezeigt, oder nicht verbindbar.

Wie in Figur 1 gezeigt, weist die weitere Leiterplatte 2 Mittel zum Erkennen der Belegung des ersten Steckverbinderteils 5 auf.

Das erste Steckverbinderteil 5 weist zumindest einen Kontakt auf, an welchem eine Versorgungsspannung U, insbesondere also 24 Volt Gleichspannung, anliegt. Ein erster weiterer Kontakt fungiert als erster Signaleingang P1 und ein zweiter weiterer Kontakt fungiert als zweiter Signaleingang P2, so dass eine zweikanalige Sicherheit in einfacher Weise erreichbar ist.

Das zweite Steckverbinderteil 6 weist ebenfalls einen ersten und zweiten Kontakt auf, wobei der erste Kontakt des zweiten Steckverbinderteils 6 mit dem ersten weiteren Kontakt des ersten Steckverbinderteils 5 verbunden ist und der zweite Kontakt des zweiten Steckverbinderteils 6 mit dem zweiten weiteren Kontakt des ersten Steckverbinderteils 5 verbunden ist.

Mittels auf der weiteren Leiterplatte 2 bestückter steuerbarer Schalter 7, insbesondere steuerbarer Halbleiterschalter, ist an die beiden Signaleingänge (P1, P2) jeweils die Versorgungsspannung U anlegbar. Zur Auswertung der Belegung des ersten Steckverbinderteils werden zeitlich wiederkehrend für jeweils einen kurzen Zeitabschnitt die Schalter 7 geöffnet, so dass von der weiteren Leiterplatte 2 aus keine Versorgungsspannung U an die Signaleingänge (P1, P2) angelegt wird. Wenn das erste Steckverbinderteil 5 nicht belegt ist, folgt der an den Signaleingängen (P1, P2) anliegende Spannungsverlauf dem von den Schaltern 7 erzeugten Spannungsverlauf. Diese Auswertung wird von einer Auswerteeinheit ausgeführt, die auf der weiteren Leiterplatte 2 bestückt ist und in der Figur nicht gezeigt ist. Das Ausgangssignal dieser Auswerteeinheit wird über den zweiten Steckverbinderteil 6 dem Verknüpfungsglied 3 zugeführt, so dass eine Verknüpfung der Signaleingänge P1 und P2 mit dem Ausgangssignal Err der Auswerteeinheit ausführbar ist. Vorzugsweise wird hierzu eine UND-Verknüpfung ausgeführt.

Mittels dem auf der weiteren Leiterplatte 2 bestückten Spannungserfassungsmittel 8 werden die an den Signaleingängen (P1, P2) anliegenden Spannungsverläufe erfasst. Durch Vergleich der für die Schalter 7 vorgesehenen Ansteuersignale mit den erfassten Spannungsverläufen ist somit detektierbar,
- ob keine Belegung des ersten Steckverbinderteils 5 vorliegt
- oder ob ein Gegensteckverbinderteil 30 mit der Brücke, welche den die Versorgungsspannung U führenden Kontakt des ersten Steckverbinderteils 5 mit den mit den Signaleingängen verbundenen Kontakten verbindet,
- oder ob eine elektrische Verbindung des ersten Steckverbinderteils 5 mit einer nicht betätigten Schaltvorrichtung 20 vorliegt.
Denn im nicht betätigten Zustand der Schaltvorrichtung 20 verbindet diese ihre mit dem ersten und zweiten weiteren Kontakt des ersten Steckverbinderteils 5 verbundenen Leitungen mit der Versorgungsspannung U.

Das Ausgangssignal des Verknüpfungsgliedes 3 fungiert als Freigabesignal 4 für den Wechselrichter des Antriebssystems.

Bei einem weiteren erfindungsgemäßen Ausführungsbeispiel ist bei Anliegen des Fehlerzustandes vom Wechselrichter ein Drehfeld erzeugt, das eine Drehzahl des Motors bewirkt, die als sicher vorgesehen ist, oder es wird ein Drehfeld erzeugt, das ein gesteuertes Abfallen der Drehzahl des Motors bewirkt, insbesondere mit einem für den Fehlerzustand vorgesehenen zeitlichen Verlauf.

Bei einem weiteren erfindungsgemäßen Ausführungsbeispiel ist statt der Schaltvorrichtung 20 eine andere sicherheitsgerichtete Vorrichtung eingesetzt, die ebenfalls mittels eines elektrischen Kabels mit dem ersten Steckverbinder 5 verbunden ist.

### Bezugszeichenliste

- 1: erste Leiterplatte, insbesondere des Wechselrichters
- 2: weitere Leiterplatte
- 3: Verknüpfungsglied, insbesondere UND-Verknüpfungsglied
- 4: Ausgangssignal, insbesondere Freigabesignal
- 5: erstes Steckverbinderteil
- 6: zweites Steckverbinderteil
- 7: steuerbarer Schalter, insbesondere steuerbarer Halbleiterschalter
- 8: Spannungserfassungsmittel
- 20: Schaltvorrichtung, insbesondere Notaus-Schalter
- 30: Gegensteckverbinderteil mit Brücke

- P1: erster Signaleingang
- P2: zweiter Signaleingang
- U: Versorgungsspannung, insbesondere 24 Volt Gleichspannung
- Err: Fehlermeldezustand

## Patentansprüche

1. Antriebssystem mit einem von einem Wechselrichter gespeisten Elektromotor,
wobei der Wechselrichter eine erste Leiterplatte (1) aufweist, welche mit einem ersten und einem zweiten Steckverbinderteil (5, 6) bestückt ist,
**wobei** die erste Leiterplatte (1) ein Verknüpfungsglied (3) aufweist, dessen Ausgangssignal als Freigabesignal für den Wechselrichter fungiert,
wobei das Verknüpfungsglied (3) zumindest einen Signaleingang (P1) und einen weiteren invertierenden Eingang (Err) aufweist **zur sicherheitsgerichteter Funktionsweise des Antriebssystems,**
wobei der Signaleingang (P1) mit einem Kontakt des ersten Steckverbinderteils (5) und mit einem Kontakt des zweiten Steckverbinderteils (6) verbunden ist,
wobei eine weitere Leiterplatte (2) mit dem zweiten Steckverbinderteil (6) steckverbunden ist, insbesondere mittels eines auf ihr bestückten Gegensteckverbinderteils (30),
wobei die weitere Leiterplatte (2) zumindest einen steuerbaren Schalter (7) aufweist, mit dem eine elektrische Verbindung zwischen einer Versorgungsspannung (U) und dem mit dem Signaleingang (P1) verbundenen Kontakt des zweiten Steckverbinderteils (6) herstellbar oder trennbar ist, insbesondere schließbar oder öffenbar ist,
wobei eine auf der weiteren Leiterplatte (2) bestückte, also angeordnete, Auswerteeinheit ein Ausgangssignal abhängig vom Vergleich des an den steuerbaren Schalter (7) geleiteten Ansteuersignals und der an dem mit dem Signaleingang (P1) verbundenen Kontakt anliegenden, mit einem Spannungserfassungsmittel (8) erfassten Spannungswert, insbesondere Spannungswerteverlauf, erzeugt,
wobei das Ausgangssignal der Auswerteeinheit dem weiteren invertierenden Eingang (Err) zugeleitet wird, insbesondere über das zweite Steckverbinderteil (6).

2. Antriebssystem nach Anspruch 1,
**dadurch gekennzeichnet, dass**
das Verknüpfungsglied (3) die an seinen Eingängen (P1, P2, Err) anliegenden Signale UNDverknüpft zur Erzeugung des Ausgangssignals des Verknüpfungsgliedes (3).

3. Antriebssystem nach mindestens einem der vorangegangenen Ansprüche,
**dadurch gekennzeichnet, dass**
die Versorgungsspannung (U) eine Gleichspannung ist, insbesondere eine Niedervoltgleichspannung, insbesondere eine 24 Volt-Spannung.

4. Antriebssystem nach mindestens einem der vorangegangenen Ansprüche,
**dadurch gekennzeichnet, dass**
wobei das Verknüpfungsglied (3) einen weiteren Signaleingang (P2) aufweist,
wobei der weitere Signaleingang (P2) mit einem weiteren Kontakt des ersten Steckverbinderteils (5) und mit einem weiteren Kontakt des zweiten Steckverbinderteils (6) verbunden ist,
wobei die weitere Leiterplatte (2) einen weiteren steuerbaren Schalter (7) aufweist, mit dem eine elektrische Verbindung zwischen der Versorgungsspannung (U) und dem mit dem weiteren Signaleingang (P2) verbundenen weiteren Kontakt des zweiten Steckverbinderteils (6) herstellbar oder trennbar ist, insbesondere schließbar oder öffenbar ist,
wobei die auf der weiteren Leiterplatte (2) bestückte, also angeordnete, Auswerteeinheit ihr Ausgangssignal zusätzlich abhängig vom Vergleich des an den weiteren steuerbaren Schalter (7) geleiteten Ansteuersignals und der an dem mit dem weiteren Signaleingang (P2) verbundenen weiteren, vom zweiten Steckverbinderteil (6) umfassten Kontakt anliegenden, mit einem weiteren Spannungserfassungsmittel erfassten Spannungswert, insbesondere Spannungswerteverlauf, erzeugt.

5. Antriebssystem nach mindestens einem der vorangegangenen Ansprüche,
**dadurch gekennzeichnet, dass**
mit dem ersten Steckverbinderteil (5) wahlweise ein eine Brücke aufweisendes Gegensteckverbinderteil (30) oder eine sicherheitsgerichtete Vorrichtung, wie Schaltvorrichtung (20) oder dergleichen, verbindbar ist.

6. Antriebssystem nach Anspruch 5,
**dadurch gekennzeichnet, dass**
die Brücke einen die Versorgungsspannung (U) aufweisenden Kontakt des ersten Steckverbinderteils (5) mit demjenigen Kontakt des ersten Steckverbinderteils (5) verbindet, welcher mit dem ersten Signaleingang (P1) verbindet, und/oder mit demjenigen Kontakt des ersten Steckverbinderteils (5) verbindet, welcher mit dem zweiten Signaleingang (P2) verbindet.

7. Antriebssystem nach Anspruch 4,
**dadurch gekennzeichnet, dass**
die Auswerteeinheit ihr Ausgangssignal als NICHT-ODER-Verknüpfung eines ersten und eines zweiten Signals erzeugt,
wobei das erste Signal abhängig vom Vergleich des an den steuerbaren Schalter (7) geleiteten Ansteuersignals und der an dem mit dem Signaleingang (P1) verbundenen Kontakt anliegenden, mit einem Spannungserfassungsmittel (8) erfassten Spannungswert, insbesondere Spannungswerteverlauf, erzeugt ist,
und wobei das zweite Signal abhängig vom Vergleich des an den weiteren steuerbaren Schalter (7) geleiteten Ansteuersignals und der an dem mit dem weiteren Signaleingang (P2) verbundenen weiteren, vom zweiten Steckverbinderteil (6) umfassten Kontakt anliegenden, mit einem weiteren Spannungserfassungsmittel erfassten Spannungswert, insbesondere Spannungswerteverlauf, erzeugt ist.

8. Antriebssystem nach Anspruch 4,
**dadurch gekennzeichnet, dass**
auf der weiteren Leiterplatte (2) eine Überwachungseinrichtung angeordnet ist,
insbesondere wobei die Überwachungseinrichtung ein von der ersten Leiterplatte (1) übermitteltes Drehzahlsignal vergleicht mit einem aus erfassten Messgrößen bestimmten Drehzahlsignal und bei unzulässig hoher Abweichung die Signale der Signaleingänge (P1, P2) über die steuerbaren Schalter (7) von der Versorgungsspannung (U) trennt.

## Claims

1. Drive system comprising an electric motor powered by an inverter,
wherein the inverter has a first printed circuit board (1) fitted with a first and a second plug-in connector part (5, 6),
wherein the first printed circuit board (1) has a gating member (3), the output signal of which acts as a release signal for the inverter,
wherein the gating member (3) has at least one signal input (P1) and a further inverting input (Err) for the safety-oriented functioning of the drive system,
wherein the signal input (P1) is connected to a contact of the first plug-in connector part (5) and to a contact of the second plug-in connector part (6),
wherein a further printed circuit board (2) is plug-connected to the second plug-in connector part (6), in particular by means of a mating plug-in connector part (30) fitted to said printed circuit board,
wherein the further printed circuit board (2) has at least one controllable switch (7), by which an electrical connection between a supply voltage (U) and the contact, connected to the signal input (P1), of the second plug-in connector part (6) can be established or broken, in particular can be closed or opened,
wherein an evaluation unit fitted on, i.e. arranged on, the further printed circuit board (2) generates an output signal depending on the comparison of the actuation signal conducted to the controllable switch (7) and the voltage value, in particular the voltage value curve, that is applied at the contact connected to the signal input (P1) and is detected using a voltage detection means (8),
wherein the output signal of the evaluation unit is supplied to the further inverting input (Err), in particular by means of the second plug-in connector part (6).

2. Drive system according to claim 1,
**characterised in that**
the gating member (3) AND-gates the signals applied at its inputs (P1, P2, Err) in order to generate the output signal of the gating member (3).

3. Drive system according to at least one of the preceding claims,
**characterised in that**
the supply voltage (U) is a DC voltage, in particular a low-volt DC voltage, in particular a 24 V voltage.

4. Drive system according to at least one of the preceding claims,
**characterised in that**
the gating member (3) has a further signal input (P2),
the further signal input (P2) being connected to a further contact of the first plug-in connector part (5) and to a further contact of the second plug-in connector part (6),
the further printed circuit board (2) having a further controllable switch (7), by which an electrical connection between the supply voltage (U) and the further contact, connected to the further signal input (P2), of the second plug-in connector part (6) can be established or broken, in particular can be closed or opened,
the evaluation unit fitted on, i.e. arranged on, the further printed circuit board (2) additionally generating its output signal depending on the comparison of the actuation signal conducted to the further controllable switch (7) and the voltage value, in particular the voltage value curve, that is applied at the further contact, which is connected to the further signal input (P2) and comprised by the second plug-in connector part (6), and detected using a further voltage detection means.

5. Drive system according to at least one of the preceding claims,
**characterised in that**
either a mating plug-in connector part (30) having a bridge, or a safety-oriented device, such as a switching device (20) or the like, can be connected to the first plug-in connector part (5).

6. Drive system according to claim 5,
**characterised in that**
the bridge connects a contact, which has the supply voltage (U), of the first plug-in connector part (5) to the contact of the first plug-in connector part (5) that connects to the first signal input (P1), and/or the bridge connects said contact having the supply voltage to the contact of the first plug-in connector part (5) that connects to the second signal input (P2).

7. Drive system according to claim 4,
**characterised in that**
the evaluation unit generates its output signal as a NOR gate of a first and a second signal, the first signal being generated depending on the comparison of the actuation signal conducted to the controllable switch (7) and the voltage value, in particular the voltage value curve, that is applied at the contact connected to the signal input (P1) and is detected using a voltage detection means (8),
and the second signal being generated depending on the comparison of the actuation signal conducted to the further controllable switch (7) and the voltage value, in particular the voltage value curve, that is applied at the further contact, which is connected to the further signal input (P2) and comprised by the second plug-in connector part (6), and detected using a further voltage detection means.

8. Drive system according to claim 4,
**characterised in that**
a monitoring apparatus is arranged on the further printed circuit board (2),
the monitoring apparatus in particular comparing a speed signal transmitted by the first printed circuit board (1) with a speed signal determined from detected measured variables, and disconnecting the signals of the signal inputs (P1, P2) from the supply voltage (U) by means of the controllable switches (7) in the event of an excessively high deviation.

## Revendications

1. Système d'entraînement comprenant un moteur électrique alimenté par un onduleur,
dans lequel l'onduleur comporte une première carte de circuit imprimé (1) qui est équipée de premier et second éléments de connecteur enfichable (5, 6),
dans lequel la première carte de circuit imprimé (1) comporte un élément logique (3) dont le signal de sortie sert de signal de validation de l'onduleur,
dans lequel l'élément logique (3) comporte au moins une entrée de signal (P1) et une autre entrée inverseuse (Err) pour un mode de fonctionnement orienté sécurité du système d'entraînement,
dans lequel l'entrée de signal (P1) est reliée à un contact du premier élément de connecteur enfichable (5) et à un contact du second élément de connecteur enfichable (6),
dans lequel une autre carte de circuit imprimé (2) est reliée par enfichage au second élément de connecteur enfichable (6), notamment au moyen d'un élément de connecteur enfichable homologue (30) dont celle-ci est équipée,
dans lequel l'autre carte de circuit imprimé (2) comporte au moins un commutateur commandable (7) avec lequel une connexion électrique entre une tension d'alimentation (U) et le contact, relié à l'entrée de signal (P1), du second élément de connecteur enfichable (6) peut être établie ou coupée, notamment être fermée ou ouverte,
dans lequel une unité d'évaluation montée, et donc disposée, sur l'autre carte de circuit imprimé (2), génère un signal de sortie en fonction de la comparaison entre le signal de commande, amené au commutateur commandable (7), et la valeur de tension, notamment la variation de la valeur de tension, appliquée au contact relié à l'entrée de signal (P1), et détectée par un moyen de détection de tension (8),
dans lequel le signal de sortie de l'unité d'évaluation est amené à l'autre entrée inverseuse (Err), notamment par le biais du second élément de connecteur enfichable (6) .

2. Système d'entraînement selon la revendication 1,
**caractérisé en ce que** l'élément logique (3) effectue une combinaison ET entre les signaux appliqués à ses entrées (P1, P2, Err) pour générer le signal de sortie de l'élément logique (3).

3. Système d'entraînement selon au moins l'une des revendications précédentes,
**caractérisé en ce que** la tension d'alimentation (U) est une tension continue, notamment une basse tension continue, notamment une tension de 24 volts.

4. Système d'entraînement selon au moins l'une des revendications précédentes,
**caractérisé en ce que** l'élément logique (3) comporte une autre entrée de signal (P2),
dans lequel l'autre entrée de signal (P2) est reliée à un autre contact du premier élément de connecteur enfichable (5) et à un autre contact du second élément de connecteur enfichable (6),
dans lequel l'autre carte de circuit imprimé (2) comporte un autre commutateur (7) commandable avec lequel une connexion électrique entre la tension d'alimentation (U) et l'autre contact, relié à l'autre entrée de signal (P2), du second élément de connecteur enfichable (6) peut être établie ou coupée, notamment être fermée ou ouverte,
dans lequel l'unité d'évaluation montée, et donc disposée, sur l'autre carte de circuit imprimé (2), génère son signal de sortie en fonction, en outre, de la comparaison entre le signal de commande, amené à l'autre commutateur commandable (7), et la valeur de tension, notamment la variation de la valeur de tension, appliquée à l'autre contact, que comporte le second élément de connecteur enfichable (6), relié à l'autre entrée de signal (P2), et détectée par un autre moyen de détection de tension.

5. Système d'entraînement selon au moins l'une des revendications précédentes,
**caractérisé en ce qu'**un élément de connecteur enfichable homologue (30) présentant un pont ou un dispositif orienté sécurité, tel qu'un dispositif de commutation (20) ou similaire, peut être relié sélectivement au premier élément de connecteur enfichable (5).

6. Système d'entraînement selon la revendication 5,
**caractérisé en ce que** le pont relie un contact présentant la tension d'alimentation (U) du premier élément de connecteur enfichable (5) au contact du premier élément de connecteur enfichable (5) qui se connecte à la première entrée de signal (P1), et/ou au contact du premier élément de connecteur enfichable (5) qui se connecte à la seconde entrée de signal (P2).

7. Système d'entraînement selon la revendication 4,
**caractérisé en ce que** l'unité d'évaluation génère son signal de sortie sous la forme d'une combinaison NON-OU de premier et second signaux, dans lequel le premier signal est généré en fonction de la comparaison entre le signal de commande, amené au commutateur commandable (7), et la valeur de tension, notamment la variation de la valeur de tension, appliquée au contact relié à l'entrée de signal (P1), et détectée par un moyen de détection de tension (8),
et dans lequel le second signal est généré en fonction de la comparaison entre le signal de commande, amené à l'autre commutateur commandable (7), et la valeur de tension, notamment la variation de la valeur de tension, appliquée à l'autre contact, que comporte le second élément de connecteur enfichable (6), relié à l'autre entrée de signal (P2), et détectée par un autre moyen de détection de tension.

8. Système d'entraînement selon la revendication 4,
**caractérisé en ce qu'**un dispositif de surveillance est disposé sur l'autre carte de circuit imprimé (2), notamment dans lequel le dispositif de surveillance compare un signal de vitesse de rotation transmis par la première carte de circuit imprimé (1), à un signal de vitesse de rotation déterminé à partir de grandeurs de mesure détectées et, en cas d'écart important, déconnecte les signaux des entrées de signaux (P1, P2) de la tension d'alimentation (U) par le biais des commutateurs commandables (7).
